# EUROPÄISCHE PATENTANMELDUNG

(11) **EP 1 849 978 A2**
(43) Veröffentlichungstag der Anmeldung: **31.10.2007**
(21) Anmeldenummer: 07005234.5
(22) Anmeldetag: 14.03.2007
(51) Int. Cl.: F02D 41/00, F02D 11/10

(54) **Verfahren zur Steuer einer Brennkraftmaschine**

(30) Priorität: 29.04.2006 DE 102006020062
(71) Anmelder: Dr.Ing. h.c. F. Porsche Aktiengesellschaft, 70435 Stuttgart (DE)
(72) Erfinder: Gruenter, Thomas, 71711 Steinheim-Höpfigheim (DE)

(57) **Zusammenfassung**

Die Erfindung betrifft ein Verfahren zur Steuerung einer Brennkraftmaschine, nämlich zur Steuerung der Öffnungsstellung bzw. Winkelstellung einer die Verbrennungsluftzufuhr zu der Brennkraftmaschine bestimmenden Drosselklappe, wobei die Betätigung eines Gaspedals elektrisch bzw. elektronisch erfasst und abhängig von der entsprechenden Messgröße eines Gaspedalwertgebers sowie abhängig von weiteren elektrischen bzw. elektronischen Einflussgrößen einer Fahrdynamikregelungseinrichtung und/oder einer Fahrgeschwindigkeitsregelungseinrichtung und/oder einer Getriebesteuerungseinrichtung ein Sollwert für die Winkelstellung der Drosselklappe bestimmt wird, der auf einen ungedrosselten Drosselklappenwinkel, in welchem ein entdrosselter Zustand der Brennkraftmaschine vorliegt, beschränkt ist, und wobei ein Drosselklappenüberweg, der dem Stellbereich der Drosselklappe zwischen dem ungedrosselten Drosselklappenwinkel und der vollen Öffnungsstellung der Drosselklappe entspricht, abhängig von der Messgröße des Gaspedalwertgebers und/oder abhängig von der Einflussgröße der Fahrgeschwindigkeitsregelungseinrichtung genutzt wird, um die Drosselklappe über den ungedrosselten Drosselklappenwinkel hinaus zu öffnen. Erfindungsgemäß wird der Drosselklappenüberweg auch abhängig von der Einflussgröße der Fahrdynamikregelungseinrichtung und/oder abhängig von der Einflussgröße der Getriebesteuerungseinrichtung genutzt, um die Drosselklappe über den ungedrosselten Drosselklappenwinkel hinaus zu öffnen.

## Beschreibung

Die Erfindung betrifft ein Verfahren zur Steuerung einer Brennkraftmaschine nach dem Oberbegriff des Anspruchs 1.

Bei herkömmlichen Brennkraftmaschinen wird die der Brennkraftmaschine zugeführte Verbrennungsluftmenge dadurch eingestellt, dass abhängig von der durch einen Fahrer vorgenommenen Betätigung eines Gaspedals über einen mechanischen Bowdenzug die Öffnungsstellung bzw. Winkelstellung einer Drosselklappe eingestellt wird, wobei die Öffnungsstellung bzw. Winkelstellung der Drosselklappe die Verbrennungsluftzufuhr zur Brennkraftmaschine bestimmt. Je nach Öffnungsstellung bzw. Winkelstellung der Drosselklappe und damit anhängig von der Verbrennungsluftzufuhr zur Brennkraftmaschine wird die der Brennkraftmaschine zugeführte Kraftstoffmenge bestimmt, um so letztendlich die Zusammensetzung des zündfähigen Verbrennungsluft-Kraftstoff-Gemisches einzustellen.

In modernen Brennkraftmaschinen wird die mechanische Verstellung der Drosselklappe zunehmend durch eine elektrische bzw. elektronische Verstellung ersetzt, wobei diese elektrische bzw. elektronische Verstellung der Drosselklappe auch mit dem Schlagwort des elektronischen Gaspedals (EGAS) bezeichnet wird. Hierbei wird die von einem Fahrer vorgenommene Betätigung des Gaspedals mit Hilfe eines Gaspedalwertgebers elektrisch bzw. elektronisch erfasst, wobei eine entsprechende Messgröße des Gaspedalwertgebers verwendet wird, um einen Sollwert für die Winkelstellung der Drosselklappe zu bestimmen. Eine Brennkraftmaschine mit EGAS ist aus DE 197 42 083 A1 bekannt.

Zur Bestimmung des Sollwerts für die Drosselklappe wird bei Brennkraftmaschinen mit EGAS neben der elektrischen bzw. elektronischen Messgröße des Pedalwertgebers mindestens eine weitere elektrische bzw. elektronische Einflussgröße verwendet, so z. B. eine Einflussgröße einer Fahrgeschwindigkeitsregeleinrichtung und/oder einer Fahrdynamikregelungseinrichtung und/oder einer Getriebesteuerungseinrichtung. Dabei wird der Sollwert für die Winkelstellung der Drosselklappe derart bestimmt, dass der Sollwert auf einen ungedrosselten Drosselklappenwinkel, in welchem ein entdrosselter Zustand der Brennkraftmaschine vorliegt, beschränkt ist.

Dieser ungedrosselte Drosselklappenwinkel entspricht dabei nicht der vollen Öffnungsstellung der Drosselklappe, sondern vielmehr einer Winkelstellung, in welcher der Druck hinter der Drosselklappe in etwa dem Druck vor der Drosselklappe entspricht, in welchem also die Drosselklappe den Verbrennungsluftstrom zur Brennkraftmaschine so gut wie nicht einschränkt. Der ungedrosselte Drosselklappenwinkel ist insbesondere abhängig von der Drehzahl der Brennkraftmaschine, wobei sich bei niedrigen Drehzahlen der Brennkraftmaschine ein ungedrosselter Drosselklappenwinkel ergeben kann, der weniger als die Hälfte der vollen Öffnungsstellung der Drosselklappe beträgt.

Die Begrenzung des Sollwerts für die Winkelstellung der Drosselklappe auf den ungedrosselten Drosselklappenwinkel ist bei stationären Betriebspunkten der Brennkraftmaschine sinnvoll, verhindert jedoch bei dynamischen Betriebspunkten, insbesondere bei kurzen Zwischengasstößen, eine ausreichend schnelle Befüllung der Brennkraftmaschine mit Verbrennungsluft und damit mit dem Verbrennungsluft-KraftstoffGemisch. Dies wird als unsportliches Verhalten wahrgenommen.

Zur Verbesserung des dynamischen bzw. sportlichen Verhaltens kann bei aus der Praxis bekannten Brennkraftmaschinen ein Drosselklappenüberweg, der dem Stellbereich der Drosselklappe zwischen dem ungedrosselten Drosselklappenwinkel und der vollen Öffnungsstellung der Drosselklappe entspricht, abhängig von der Messgröße des Gaspedalwertgebers und/oder abhängig von der Einflussgröße der Fahrgeschwindigkeitsregelung genutzt werden, um die Drosselklappe über den ungedrosselten Drosselklappenwinkel hinaus zu öffnen.

Hiervon ausgehend liegt der vorliegenden Erfindung das Problem zu Grunde ein Verfahren zur Steuerung einer Brennkraftmaschine zu schaffen, welches ein nochmals sportlicheres Fahrverhalten ermöglicht.

Dieses Problem wird dadurch gelöst, dass die eingangs genannten Verfahren durch die Merkmale des kennzeichnenden Teils des Anspruchs 1 weitergebildet sind. Erfindungsgemäß wird der Drosselklappenüberweg auch abhängig von der Einflussgröße der Fahrdynamikregelungseinrichtung und/oder abhängig von der Einflussgröße der Getriebesteuerungseinrichtung genutzt, um die Drosselklappe über den ungedrosselten Drosselklappenwinkel hinaus zu öffnen.

Im Sinne der hier vorliegenden Erfindung wird erstmals vorgeschlagen, den Drosselklappenüberweg auch abhängig von der Einflussgröße der Fahrdynamikregelungseinrichtung und/oder abhängig von der Einflussgröße der Getriebesteuerungseinrichtung zu nutzen, um die Drosselklappe über den ungedrosselten Drosselklappenwinkel hinaus zu öffnen. Hierdurch kann das dynamische Verhalten von Brennkraftmaschinen verbessert werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert.
Dabei zeigt:

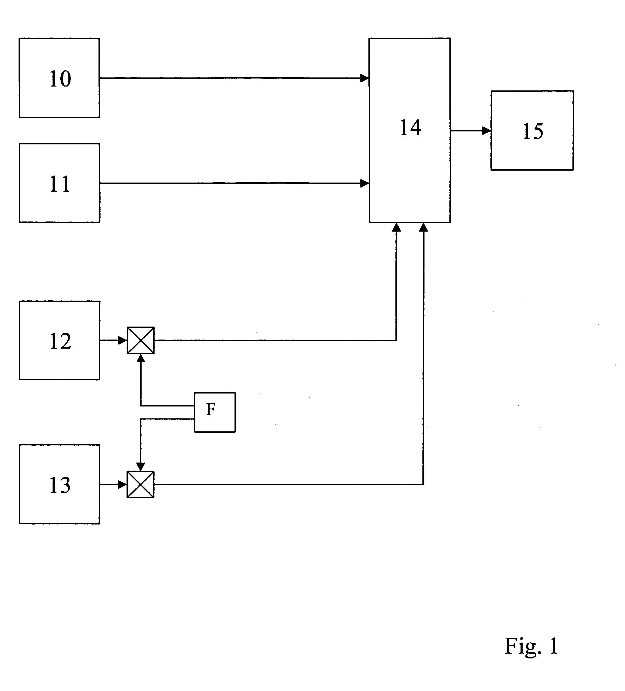

Fig. 1 ein Blockschaltbild zur Verdeutlichung des erfindungsgemäßen Verfahrens zur Steuerung einer Brennkraftmaschine.
Die hier vorliegende Erfindung betrifft ein Verfahren zur Steuerung einer Brennkraftmaschine, nämlich zur Steuerung der Öffnungsstellung bzw. Winkelstellung einer die Verbrennungsluftzufuhr zur Brennkraftmaschine bestimmenden Drosselklappe.

Zur Steuerung der Öffnungsstellung bzw. Winkelstellung der Drosselklappe wird ein Sollwert für die Winkelstellung der Drosselklappe bestimmt. Dieser Sollwert für die Winkelstellung der Drosselklappe wird auf Basis mehrerer elektrischer bzw. elektronischer Größen bestimmt. So ist der Sollwert für die Winkelstellung der Drosselklappe abhängig von der durch einen Fahrer vorgenommenen Betätigung eines Gaspedals, wobei ein Gaspedalwertgeber die Betätigung des Gaspedals elektrisch bzw. elektronisch erfasst und eine entsprechende elektrische bzw. elektronische Messgröße ausgibt. Weiterhin ist der Sollwert für die Winkelstellung der Drosselklappe von elektrischen bzw. elektronischen Einflussgrößen einer Fahrgeschwindigkeitsregelungseinrichtung, einer Fahrdynamikregelungseinrichtung und einer Getriebesteuerungseinrichtung abhängig. Dabei wird der Sollwert für die Winkelstellung der Drosselklappe derart bestimmt, dass derselbe auf einen ungedrosselten Drosselklappenwinkel, in welchem ein entdrosselter Zustand der Brennkraftmaschine vorliegt, beschränkt ist. Den Stellbereich der Drosselklappe zwischen dem ungedrosselten Drosselklappenwinkel und der vollen Öffnungsstellung der Drosselklappe bezeichnet man als Drosselklappenüberweg.

Die hier vorliegende Erfindung betrifft nun solche Details zur Steuerung der Öffnungsstellung bzw. Winkelstellung der Drosselklappe, mit Hilfe derer dieselbe unter Ausnutzung des Drosselklappenüberwegs über den ungedrosselten Drosselklappenwinkel hinaus geöffnet werden kann. Dies wird nachfolgend unter Bezugnahme auf Fig. 1 in größerem Detail beschrieben.

So zeigt Fig. 1 stark schematisiert in einem Blockschaltbild einen Gaspedalwertgeber 10, eine Fahrgeschwindigkeitsregelungseinrichtung 11, eine Fahrdynamikregelungseinrichtung 12 sowie eine Getriebesteuerungseinrichtung 13. Der Gaspedalwertgeber 10, die Fahrgeschwindigkeitsregelungseinrichtung 11, die Fahrdynamikregelungseinrichtung 12 sowie die Getriebesteuerungseinrichtung 13 geben jeweils eine elektrische bzw. elektronische, drehmomentbasierte Größe aus.

So gibt der Gaspedalwertgeber 10 eine elektrische bzw. elektronische Messgröße aus, die von einer durch einen Fahrer vorgenommenen Betätigung des Gaspedals abhängig ist und einem Fahrerwunsch-Solldrehmoment der Brennkraftmaschine entspricht. Die Fahrgeschwindigkeitsregelungseinrichtung 11, die Fahrdynamikregelungseinrichtung 12 sowie die Getriebesteuerungseinrichtung 13 geben ebenfalls elektrische bzw. elektronische, drehmomentbasierte Größen aus, wobei es sich bei diesen Einflussgrößen um Solldrehmomente der Brennkraftmaschine handelt, die als Eingriffsmomente von der Fahrgeschwindigkeitsregelungseinrichtung 11 bzw. der Fahrdynamikregelungseinrichtung 12 bzw. der Getriebesteuerungseinrichtung 13 vorgegeben werden.

Bei den von dem Gaspedalwertgeber 10, der Fahrgeschwindigkeitsregeleinrichtung 11, der Fahrdynamikregelungseinrichtung 12 und der Getriebesteuerungseinrichtung 13 ausgegebenen elektrischen bzw. elektronischen Größen handelt es sich demnach um Solldrehmomente der Brennkraftmaschine, wobei diese elektrischen bzw. elektronischen Größen einer Auswerteeinrichtung 14 zugeführt werden, in welcher von den bereitgestellten Solldrehmomenten das maximale Solldrehmoment der Brennkraftmaschine ausgewählt wird. Auf Basis des in der Auswerteeinrichtung 14 ausgewählten maximalen Solldrehmoment der Brennkraftmaschine wird dann eine Stellgröße 15 für die Drosselklappe generiert, auf Basis derer die Drosselklappe im Bereich des Drosselklappenüberwegs über den ungedrosselten Drosselklappenwinkel hinaus geöffnet werden kann.

Die Ausnutzung des Drosselklappenüberwegs zur Öffnung der Drosselklappe über den ungedrosselten Drosselklappenwinkel hinaus auf Basis des vom Gaspedalwertgebers 10 ausgegebenen Solldrehmoments sowie auf Basis des von der Fahrgeschwindigkeitsregelungseinrichtung 11 ausgegebenen Solldrehmoments ist bereits bei aus der Praxis bekannten Verfahren zur Steuerung einer Brennkraftmaschine üblich. Erfindungsgemäß wird der Drosselklappenüberweg nun auch abhängig von dem von der Fahrdynamikregelungseinrichtung 12 ausgegebenen Solldrehmoment und/oder abhängig von dem von der Getriebesteuerungseinrichtung 13 ausgegebenen Solldrehmoment genutzt, um die Drosselklappe über den ungedrosselten Drosselklappenwinkel hinaus zu öffnen. Hierzu werden, wie Fig. 1 entnommen werden kann, das von der Fahrdynamikregelungseinrichtung 12 ausgegebene Solldrehmoment sowie das von der Getriebesteuerungseinrichtung 13 ausgegebene Solldrehmoment mit einem Multiplikationsfaktor F überhöht. Die jeweils mit dem Multiplikationsfaktor F überhöhten Solldrehmomente werden der Auswerteeinrichtung 12 zur Bestimmung des maximalen Solldrehmoments zugeführt. Wesentlich hierbei ist, dass der Multiplikationsfaktor F es ermöglicht, die externen Anforderungen so zu beeinflussen sind, dass interne Begrenzungen umgehbar sind.

Bei dem Multiplikationsfaktor F handelt es sich um einen drehzahlabhängigen und/oder drehmomentabhängigen Multiplikationsfaktor, also um einen Multiplikationsfaktor, der vom Betriebspunkt der Brennkraftmaschine abhängig ist. Im gezeigten Ausführungsbeispiel wird zur Überhöhung des von der Fahrdynamikregelungseinrichtung 12 ausgegebenen Solldrehmoments sowie zur Überhöhung des von der Getriebesteuerungseinrichtung 13 ausgegebenen Solldrehmoments derselbe Multiplikationsfaktor F verwendet. Es kann auch vorgesehen sein, diesbezüglich unterschiedliche Multiplikationsfaktoren zu verwenden.

Im Sinne der hier vorliegenden Erfindung kann weiterhin vorgesehen werden, dass der Drosselklappenüberweg nur dann abhängig von dem von der Fahrdynamikregelungseinrichtung 12 sowie dem von der Getriebesteuerungseinrichtung 13 ausgegebenen Solldrehmoment genutzt wird, wenn die entsprechenden Solldrehmomente sicherheitstechnisch plausibel sind. So kann z. B. mit Hilfe von Algorithmen überprüft werden, ob die von der Fahrdynamikregelungseinrichtung 12 sowie Getriebesteuerungseinrichtung 13 ausgegebenen Solldrehmomente plausibel sind. Nur dann, wenn die Sicherheitsüberprüfung positiv ausfällt, werden die entsprechenden Solldrehmomente in der Auswerteeinrichtung 14 nach entsprechender Überhöhung durch den Multiplikationsfaktor zur Maximalwertbildung genutzt.

## Patentansprüche

1. Verfahren zur Steuerung einer Brennkraftmaschine, nämlich zur Steuerung der Öffnungsstellung bzw. Winkelstellung einer die Verbrennungsluftzufuhr zu der Brennkraftmaschine bestimmenden Drosselklappe, wobei die Betätigung eines Gaspedals elektrisch bzw. elektronisch erfasst und abhängig von der entsprechenden Messgröße eines Gaspedalwertgebers sowie abhängig von weiteren elektrischen bzw. elektronischen Einflussgrößen einer Fahrdynamikregelungseinrichtung und/oder einer Fahrgeschwindigkeitsregelungseinrichtung und/oder einer Getriebesteuerungseinrichtung ein Sollwert für die Winkelstellung der Drosselklappe bestimmt wird, der auf einen ungedrosselten Drosselklappenwinkel, in welchem ein entdrosselter Zustand der Brennkraftmaschine vorliegt, beschränkt ist, und wobei ein Drosselklappenüberweg, der dem Stellbereich der Drosselklappe zwischen dem ungedrosselten Drosselklappenwinkel und der vollen Öffnungsstellung der Drosselklappe entspricht, abhängig von der Messgröße des Gaspedalwertgebers und/oder abhängig von der Einflussgröße der Fahrgeschwindigkeitsregelungseinrichtung genutzt wird, um die Drosselklappe über den ungedrosselten Drosselklappenwinkel hinaus zu öffnen, **dadurch gekennzeichnet, dass** der Drosselklappenüberweg auch abhängig von der Einflussgröße der Fahrdynamikregelungseinrichtung und/oder abhängig von der Einflussgröße der Getriebesteuerungseinrichtung genutzt wird, um die Drosselklappe über den ungedrosselten Drosselklappenwinkel hinaus zu öffnen.

2. Verfahren nach Anspruch 1, **dadurch gekennzeichnet, dass** der Gaspedalwertgeber, die Fahrgeschwindigkeitsregelungseinrichtung, die Fahrdynamikregelungseinrichtung und die Getriebesteuerungseinrichtung als Messgröße bzw. Einflussgröße jeweils ein Solldrehmoment ausgeben, wobei aus diesen Solldrehmomenten das maximale Solldrehmoment ausgewählt wird, auf Grundlage dessen die Drosselklappe im Bereich des Drosselklappenüberwegs verstellt wird.

3. Verfahren nach Anspruch 2, **dadurch gekennzeichnet, dass** die von der Fahrdynamikregelungseinrichtung bereitgestellte Einflussgröße mit einem Multiplikationsfaktor überhöht wird, und dass die so überhöhte Einflussgröße zur Bestimmung des maximalen Solldrehmoments verwendet wird.

4. Verfahren nach Anspruch 2 oder 3, **dadurch gekennzeichnet, dass** die von der Getriebesteuerungseinrichtung bereitgestellte Einflussgröße mit einem Multiplikationsfaktor überhöht wird, und dass die so überhöhte Einflussgröße zur Bestimmung des maximalen Solldrehmoments verwendet wird.

5. Verfahren nach Anspruch 3 oder 4, **dadurch gekennzeichnet, dass** die Einflussgröße der Fahrdynamikregelungseinrichtung und/oder der Getriebesteuerungseinrichtung mit einem drehzahlabhängigen und/oder drehmomentabhängigen Multiplikationsfaktor überhöht werden.

6. Verfahren nach einem oder mehreren der Ansprüche 1 bis 5, **dadurch gekennzeichnet, dass** der Drosselklappenüberweg nur dann abhängig von der Einflussgröße der Fahrdynamikregelungseinrichtung und/oder abhängig von der Einflussgröße der Getriebesteuerungseinrichtung genutzt wird, wenn die von der Fahrdynamikregelungseinrichtung und/oder der Getriebesteuerungseinrichtung bereitgestellten Einflussgrößen sicherheitstechnisch plausibel sind.
